**Europäisches Patentamt**

**European Patent Office**

**Office européen des brevets**

(11) Veröffentlichungsnummer: **0 157 205 B1**

(12) **EUROPÄISCHE PATENTSCHRIFT**

(45) Veröffentlichungstag der Patentschrift:
07.12.88

(51) Int. Cl.⁴: **B 60 C 23/02**

(21) Anmeldenummer: 85102517.1

(22) Anmeldetag: 06.03.85

(54) Vorrichtung zur Kontrolle des Luftdrucks an Fahrzeugreifen.

(30) Priorität: 06.04.84 DE 3412949

(43) Veröffentlichungstag der Anmeldung:
09.10.85 Patentblatt 85/41

(45) Bekanntmachung des Hinweises auf die Patenterteilung:
07.12.88 Patentblatt 88/49

(84) Benannte Vertragsstaaten:
DE FR GB IT

(56) Entgegenhaltungen:
DE-A- 1 946 627
DE-A- 2 907 034
US-A- 2 179 255

(73) Patentinhaber: Dr.Ing.h.c. F. Porsche
Aktiengesellschaft, Porschestrasse 42,
D-7000 Stuttgart 40 (DE)

(72) Erfinder: Falk, Peter, Dipl.-Ing., Danziger Strasse 1,
D-7141 Schwieberdingen (DE)
Erfinder: Kroniger, Wilhelm, Am Geissberg 20,
D-7251 Friolzheim (DE)

**Beschreibung**

Die Erfindung bezieht sich auf eine Vorrichtung nach dem Oberbegriff des Anspruchs 1.

Es ist ein Luftdruckkontrollsystem für Fahrzeugreifen bekannt, das aus einer magnetischen Übertragungseinrichtung besteht, die ein in die Felge eingebautes Druckmeßelement mit integriertem Schwingkreis und einen bei jeder Radumdrehung gegenüberstehenden ortsfest angeordneten HF-Geber umfaßt. Im Geber wird bei Reifensolldruck eine Impulsfolge erzeugt, die bei Druckverlust unterbrochen wird, was von einer Auswerteelektronik erkannt und angezeigt wird. Bei diesem System ist für jedes Rad eine Kontrolleinheit mit einem Schwellwert vorgesehen. Ein solches System ist hinsichtlich eines Austauschs der Fahrzeugräder z.B. von der Vorder- zur Hinterachse oder in anderer Weise dann unproblematisch, wenn die Reifendrücke aller Fahrzeugräder gleich sind. Wenn aber, wie in den meisten Fällen, die Kraftfahrzeuge unterschiedliche Reifendrücke an den Rädern der Vorder- und Hinterachse aufweisen, ist eine Kontrolle des Reifendrucks nach einem Radwechsel nicht mehr gewährleistet. Der für die Hinterräder beispielsweise mit höherem Druck ausgelegte Schwellwert kann z.B. keine Anzeige für die Vorderräder mit geringerem Druck bewirken. Um diesem Nachteil abzuhelfen, müßte das Druckmeßelement bei einem Wechsel der Fahrzeugräder ausgetauscht werden, was einen hohen Montageaufwand bedingt.

Aus der US-A-21 79 255 ist ein Luftdruckschalter mit zwei auf unterschiedliche Drücke eines Kraftfahrzeugrades ansprechende Stellelemente bekannt, die jeweils eine gegen eine Druckfeder wirkende Ventilkugel umfassen. Bei einem Luftverlust im Reifen eines Fahrzeugrades spricht das eine Stellelement im Schalter an und über einen elektrischen Schaltkreis wird eine weiß aufscheinende Lampe eingeschaltet. Bei einem weiteren Druckverlust im gleichen Reifen spricht auch das zweite Stellelement an und es wird nachfolgend eine rot aufscheinende Warnlampe eingeschaltet.

Der Erfindung liegt die Aufgabe zugrunde, ein Luftdruckkontrollsystem der eingangs genannten Art zu schaffen, das für Räder mit unterschiedlichem Luftdruck an der Vorder- und Hinterachse eines Fahrzeugs verwendbar ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß eine Druckkontrolle der mit unterschiedlichen Reifendrücken versehenen vorderen und hinteren Fahrzeugräder auch nach einem Austausch, z.B. von der Hinterachse zur Vorderachse, möglich ist. Dies wird durch die Anordnung von mindestens zwei Druckmeßelementen pro Fahrzeugrad erreicht, wodurch ein aufwendiger Austausch der Elemente bei jedem Radwechsel zwischen den Achsen vermieden wird.

Ein Ausführungsbeispiel der Erfindung ist in der Zeichnung dargestellt und wird im folgenden näher beschrieben. Es zeigt

Fig. 1 einen Querschnitt durch ein Fahrzeugrad mit einem Druckmeßelement, einem HF-Geber und einer Auswerteelektronik,

Fig. 2 eine Anordnung der aus jeweils zwei Druckmeßelementen bestehenden Kontrolleinheit je Fahrzeugrad, und

Fig. 3, 4 und 5 eine schematische Folgedarstellung der mit einem abfallenden Reifendruck beaufschlagten Druckmeßelemente.

Das Luftdruckkontrollsystem 1 umfaßt im wesentlichen ein in die Felge 2 eingebautes Druckmeßelement 3, einen ortsfest angeordneten HF-Geber 4 und eine Auswerteelektronik 5 sowie eine Anzeige 6. Das Druckmeßelement 3 weist an der Felgeninnenseite 7 eine Membran 8 auf, die vom Reifendruck gegen den Vergleichsdruck $P_1$ bzw. $P_2$ eines in einer Kammer 9 eingeschlossenen Gasvolumens als Referenzvolumen gedrückt wird. Die Membran 8 ist bei korrektem Reifendruck stets in Gleichgewichtslage. Ändert sich durch Luftverlust im Reifen das Verhältnis Reifendruck zu Vergleichsdruck, so verschiebt sich die Membran 8 und unterbricht einen in das Druckmeßelement 3 integrierten elektrischen Schwingkreis. Dieser bedämpft über einen Luftspalt 10 hinweg den HF-Geber 4. Bei jeder Radumdrehung erzeugt der «vorbeifahrende» Saugkreis einen Impuls im Geber 4, solange das Druckmeßelement 3 geschlossen ist. Die Impulse werden der Auswerteelektronik 5 zugeführt. Bei einem Reifendruckverlust wird die im Geber 4 erzeugte Impulsfolge unterbrochen, was von der Auswerteelektronik als Reifendefekt erkannt und angezeigt wird.

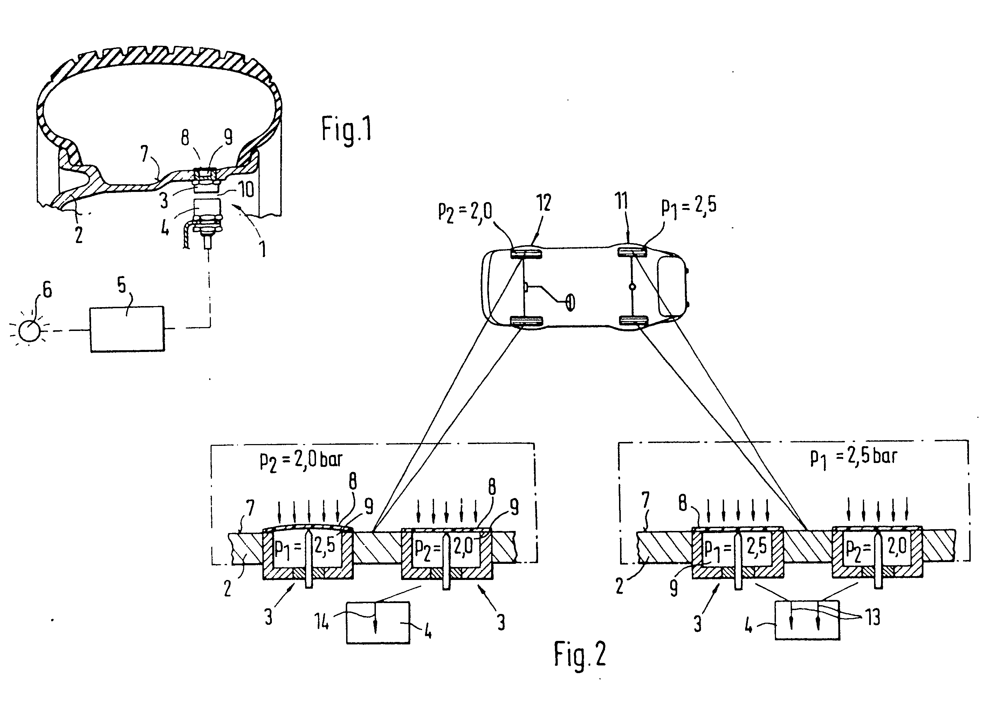

Wie Fig. 2 in schematischer Darstellung näher zeigt, sind pro Rad 11, 12 jeweils zwei Druckmeßelemente 3 vorgesehen. Die angeführten Druckangaben sollen nur als Beispiel zur näheren Erläuterung der Wirkungsweise der Kontrolleinrichtung dienen und keine absoluten Werte darstellen.

Das Fahrzeug ist an seinen Hinterrädern 11 mit einem Reifendruck von $P_1 = 2{,}5$ bar und an seinen Vorderrädern 12 mit einem Reifendruck von $P_2 = 2{,}0$ bar versehen. Die jedem Rad 11, 12 zugeordneten beiden Druckmeßelemente 3 weisen dem Reifensolldruck der Vorder- und Hinterräder 11, 12 entsprechende Schwellwerte auf, so daß ein Wechsel der Räder möglich wird, ohne daß auf die Kontrolle des Reifendruckes verzichtet werden muß.

Durch die doppelte Anordnung der Druckmeßelemente 3 mit unterschiedlichen Schwellwerten werden im HF-Geber 4 der Hinterräder 11 bei Reifensolldruck zwei Impulse 13 und an den Vorderrädern 12 wird ein Impuls 14 im entsprechenden Geber 4 erzeugt. Das mit höherem Druck $P_1 = 2{,}5$ bar ausgelegte Meßelement 3 erzeugt keine Impulse im Geber 4, da die Membran 8 verschoben und der elektrische Schwingkreis unterbrochen ist.

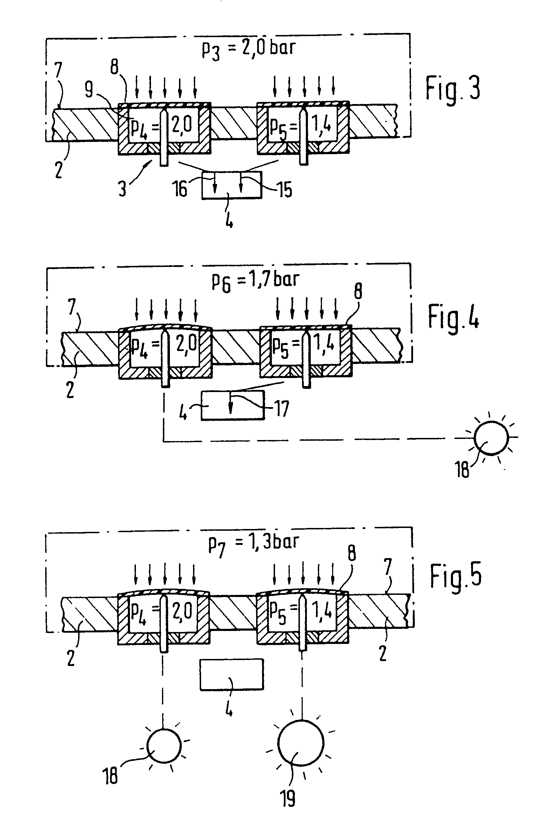

Nach einem weiteren Ausführungsbeispiel gemäß der Fig. 3 bis 5 sind jeweils pro Rad zwei Druckmeßelemente 3 vorgesehen, die bei vorhandenem Reifensolldruck jeweils einen Impuls 15, 16 im Geber 4 erzeugen. Es sei z.B. ein Reifensolldruck von $P_3 = 2{,}0$ bar angenommen, wobei das eine Druckelement 3 eine Schaltschwelle bei $P_4 = 2{,}0$ bar und das benachbarte Druckmeßelement 3 eine Schaltschwelle bei $P_5 = 1{,}4$ bar aufweist. Bei einem Abfall

des Reifensolldruckes von $P_3 = 2,0$ bar auf z.B. $P_6 = 1,7$ bar, wie in Fig. 4 dargestellt, wird nur noch ein Impuls 17 durch das Druckelement 3 mit der niederen Schaltschwelle ($P_5 = 1,4$ bar) erzeugt. Eine Anzeige des Abfalls des Reifendrucks unter den Solldruck wird über eine erste Warnsignaleinrichtung 18 angezeigt. Durch dieses Warnsignal wird dem Fahrer mitgeteilt, daß die Fahrt nur noch mit eingeschränkter Geschwindigkeit fortgesetzt werden darf.

Beim Unterschreiten des zweiten Schwellwertes ($P_5 = 1,4$ bar) des Druckmeßelementes 3, wie Fig. 5 näher zeigt, werden im Geber 4 keine Impulse mehr erzeugt. Der Fahrer erhält über die Anzeige 19 eine zweite verschärfte Warnung. Er hat jetzt Informationen über die Geschwindigkeit und Größenordnung des Druckabfalls und kann über Bedingungen und Dauer einer Fahrtfortsetzung eine Entscheidung treffen.

## Patentansprüche

1. Vorrichtung zur Kontrolle des Luftdrucks von Fahrzeugreifen mit einer magnetischen Übertragungseinrichtung, die mit einer elektronischen Auswerteeinrichtung verknüpft ist, wobei die Übertragungseinrichtung ein radfestes Druckmeßelement mit integriertem elektrischem Schwingkreis und einen in Abhängigkeit vom Reifendruck aufweisenden Schwellwert sowie einen achsfesten HF-Geber umfaßt, in dem abhängig vom Reifendruck je Radumdrehung Impulse bzw. Impulsfolgen entstehen und in ein Anzeigesignal umgeformt werden und jedem Fahrzeugrad (11, 12) der Vorder- und Hinterachse jeweils zwei Druckmeßelemente (3) mit unterschiedlichen Schwellwerten ($P_1$ und $P_2$) zugeordnet sind, dadurch gekennzeichnet, daß das eine Druckmeßelement (3) einen dem Reifensolldruck des Vorderrades (12) und das weitere Druckmeßelement (3) einen dem Reifensolldruck des Hinterrades (11) entsprechenden Schwellwert ($P_1$ und $P_2$) aufweist.

2. Vorrichtung nach Anspruch 1, dadurch gekennzeichnet, daß die beiden Druckmeßelemente (3) eines Fahrzeugrades (11 bzw. 12) einen solchen Schwellwertabstand ($P_4$, $P_5$) zueinander aufweisen, daß bei einem Abfall des Reifendruckes ($P_3$) unter den oberen Schwellwert ($P_4$) ein Warnsignal (18) ausgelöst wird.

3. Vorrichtung nach Anspruch 2, dadurch gekennzeichnet, daß die beiden Druckmeßelemente (3) eines Fahrzeugrades (11 bzw. 12) einen solchen Schwellwertabstand zueinander aufweisen, daß bei einem Abfall des Reifendruckes ($P_1$) unter den unteren Schwellwert ($P_5$) ein weiteres Warnsignal (19) ausgelöst wird.

## Claims

1. Device for monitoring the air pressure of vehicle tyres with a magnetic relay device linked to an electronic evaluating device, whereby the relay device comprises a pressure measuring device fixed to the wheel with integrated electric oscillating circuit and a threshold value dependent on the tyre pressure as well as a high-frequency transmitter fixed with respect to the axle, in which transmitter, depending on the tyre pressure, for every revolution of the wheel, impulses or impulse sequences are produced and are transformed into an indicating signal and in which two pressure measuring elements (3) with differing threshold values ($P_1$ and $P_2$) are associates with each vehicle wheel (11, 12) of the front and rear axle, characterized in that the one pressure measuring element (3) has a threshold value ($P_1$ and $P_2$) corresponding to the required tyre pressure of the front wheel (12) and the other pressure measuring element (3) has a threshold value ($P_1$ and $P_2$) corresponding to the required tyre pressure of the rear wheel (11).

2. Device according to claim 1, characterized in that the two pressure measuring elements (3) of a vehicle wheel (11 or 12) have such a difference ($P_4$, $P_5$) in their threshold values that in the case of a decrease in tyre pressure ($P_3$) beneath the upper threshold value ($P_4$) a warning signal (18) is triggered.

3. Device according to claim 2, characterised in that the two pressure measuring elements (3) of a vehicle wheel (11 or 12) differ in their threshold values so that in the case of a decrease in tyre pressure ($P_1$) beneath the lower threshold value ($P_5$), another warning signal (19) is triggerede.

## Revendications

1. Dispositif de contrôle de la pression d'air de pneumatiques de véhicule comportant un dispositif de transmission magnétique qui est combiné avec un dispositif de traitement électronique, le dispositif de transmission comportant un élément manométrique fixé à la roue, à circuit oscillant électrique intégré, et présentant une valeur de seuil fonction de la pression du pneumatique, ainsi qu'un transmetteur HF fixé à l'essieu, dans lequel des impulsions ou trains d'impulsions sont produit(e)s à chaque tour de roue en fonction de la pression du pneumatique et sont transformé(e)s en un signal d'indication, et deux éléments manométriques (3) à valeurs de seuil ($P_1$ et $P_2$) différentes étant rattachés respectivement à chaque roue (11, 12) de l'essieu avant et de l'essieu arrière, caractérisé en ce qu'un premier élément manométrique (3) présente une valeur de seuil ($P_1$) correspondant à la pression de pneumatique prescrite de la roue avant (12) et le second élément manométrique (3) à une valeur de seuil ($P_2$) correspondant à la pression de pneumatique prescrite de la roue arrière (11).

2. Dispositif selon la revendication 1, caractérisé en ce que les deux éléments manométriques (3) d'une roue de véhicule (11 ou 12) présentent entre eux une différence de valeurs de seuil ($P_4$, $P_5$) telle qu'en cas de chute de la pression de pneumatique ($P_3$) au-dessous de la valeur de seuil supérieure ($P_4$), un signal d'alarme (18) est déclenché.

3. Dispositif selon la revendication 2, caractérisé en ce que les deux éléments manométriques (3) d'une roue de véhicule (11 ou 12) présentent entre eux une différence de valeur de seuil telle qu'en cas de chute de la pression de pneumatique ($P_1$) au-dessous de la valeur de seuil inférieure ($P_5$), un autre signal d'alarme (19) est déclenché.

Fig.1

Fig.2

$p_2 = 2,0$  12  11  $p_1 = 2,5$

$p_2 = 2,0$ bar

$p_1 = 2,5$ bar

$p_1 = 2,5$  $p_2 = 2,0$

$p_1 = 2,5$  $p_2 = 2,0$

EP 0 157 205 B1

$p_3 = 2{,}0\,bar$

Fig. 3

$p_4 = 2{,}0$    $p_5 = 1{,}4$

$p_6 = 1{,}7\,bar$

Fig. 4

$p_4 = 2{,}0$    $p_5 = 1{,}4$

$p_7 = 1{,}3\,bar$

Fig. 5

$p_4 = 2{,}0$    $p_5 = 1{,}4$

7